# EUROPEAN PATENT APPLICATION

(11) **EP 1 619 060 A2**
(43) Date of publication of application: **25.01.2006**
(21) Application number: 05380159.3
(22) Date of filing: 18.07.2005
(51) Int. Cl.: B60J 10/00

(54) **Sealing joint between vehicle bodywork components**

(30) Priority: 22.07.2004 ES 200401796 U
(71) Applicant: Seat, S.A., 08040 Barcelona (ES)
(72) Inventor: Colet I Gali, Joan, 08760 Martorell Barcelona (ES); Parcerisa Garcia, Xavier, 08760 Martorell Barcelona (ES); Vara Gallego, Jose Ignacio, 08760 Martorell Barcelona (ES)
(74) Representative: Carvajal y Urquijo, Isabel

(57) **Abstract**

A sealing joint between vehicle bodywork components including at least one fixing clip (10) with a body (1) that is trapped in the joint (7) and at least one anchoring lug (3) projecting from said joint (7) on the side placed against the bodywork (6), which has notches (11) opposite the hooks, collaborating with them in fixing the joint (7).

## Description

The present invention refers to a sealing joint between vehicle bodywork components constituted in order to couple and fix itself on one of the components to act as a sealing means between two independent bodywork components.

The joint of the invention is applicable as a sealing joint between two bodywork components of which at least one of them is mobile. This is the case, for example, with the joints serving as a guide to vehicle door windows, which are fixed on the doors. For this, the joints are constituted with a groove which couples and fits by pressure on the entire contour of the hollow of the door framework defining the window. In addition to this fixing the joints usually have projections in the same material which fit in slots distributed along the entire frame of the window.

Although the formation described may seem to be sufficient to assure its joining to the door framework and window frame assembly, there are sections in which the coupling and the fixing are not correct. This happens for example in the upper corner of the joint which contacts the pillar which, by defining a very closed angle, causes that the joint may be cantilevered in that area, with a slight separation from the pillar contour. This situation may create a sufficient bending moment on the corner of the joint making it shift outwardly, also dragging the window, when successively closing the door.

This circumstance makes it necessary to incorporate a special fixing for the corner of the joint. In certain vehicle models, the fixing or joining is performed by means of a screw meaning a more tedious assembly process affecting the appearance of the window. It is also known to use a projection designed on the joint, from the same material as said joint, fitting in a hole arranged on the window frame. This embodiment, however, has the drawback that as the fixing is hidden from view of the operator, a correct assembly cannot be assured.

The object of the present invention is to eliminate the drawbacks set forth by means of a joint having means assuring its anchoring to the bodywork component on which it must be assembled, assuring a perfect coupling and fixing on the entire contour.

To achieve this, according to the invention, the joint includes one or more fixing clips in a different material to that of the joint, constituted for example from an elastic material. These fixing clips comprise a body inserted or trapped in the joint and one or more anchoring lugs projecting from said joint, on the side placed against the bodywork component on which the joint will be fixed, which lugs can be opposite and introduced in slots or notches of said bodywork component.

The body of the fixing clips is configured to adapt to the geometry of the surface of the bodywork component on which it is placed. For their part, the lugs are finished at their ends in hooks which are caught in the slots or notches.

In the example mentioned above in relation to the joints serving as guides to vehicle door windows, the fixing clip will be inserted in the corner of the rubber joint which must be coupled and joined on the pillar angle. Due to their configuration the lugs with the end hooks fit in the slots designed on the corner of the window frame, resulting in a safe assembly.

For greater safety in fixing the joint by means of the clips of the invention, the bodywork component will have a formation complementary to the lug hooks in the slots or notches, thus assuring catching and anchoring of said lugs.

Each fixing clip may have one, two or more lugs projecting from the body that is inserted in the joint.

The shape of the hook in which the lugs are finished and the complementary formation in the slots or notches of the bodywork component favour assembly and fixing of the joint, given that as pressure is applied on the clip, progressive elastic deformation of the tabs is caused when contacting the slot in the frame until overcoming the shape of the hook, thus allowing the tabs to return to their resting position and the joint being effectively joined to the door window frame, given that the tabs are anchored to the frame, preventing the return of the joint in the direction opposite to that of assembly.

The length of the hook tabs will depend on the thickness of the door frame bodywork, given that they need narrow allowance in order to tolerate good fixing operation.

The body of the fixing clip can be configured by way of a plate, which plate can have openings or holes the function of which is to correctly assure clip insertion in the joint in a first pre-assembly stage.

The process of assembling the shape joint on the framework-frame assembly could be summarised in the following steps:
1.- The joint groove is adjusted around the entire edge of the door framework defining the door window.
2.- The entire joint is checked by means of a gentle pressure with the fingers so that its projections fit in their corresponding slots on the door frame.
3.- Finally, and once the rubber joint is correctly positioned, its corner, where the fixing clip is, is pressed against the slot of the window frame until achieving its introduction and coupling in the slot or notch of the bodywork component, until the worker assures correct assembly and coupling.

The main advantage of the joint of the invention is its efficacy in the assembly on the frame or bodywork component.

This efficacy means greater speed if compared to using a simple screw, apart from the improvement produced by its remaining hidden. On the other hand greater safety is achieved in comparison with other types of traditional hidden joints, given that the "clip" produced by the tabs of the hook lugs when fixed on the notch of the frame assures its correct assembly.

The features and advantages set forth, as well as others belonging to the invention, will be better understood with the following description made in reference to the attached drawings, in which a non-limiting embodiment is shown.

In the drawings:
Figure 1 shows a perspective view of a fixing clip for a sealing joint formed according to the invention.
Figure 2 shows a similar view to that of Figure 1 of a fixing clip embodiment variant.
Figure 3 shows a perspective exploded view of the bodywork of a door, including part of the window frame and of the joint that can be fixed in said frame.
Figure 4 shows a perspective view similar to that of Figure 3 of the assembled frame and joint assembly.
Figure 5 shows a cross section of the frame and joint taken along the V-V section line of Figure 4.
Figure 6 shows detail A of Figure 5 at a greater scale, showing the slot or notch of the bodywork component which the sealing joint fixing clip couples to.

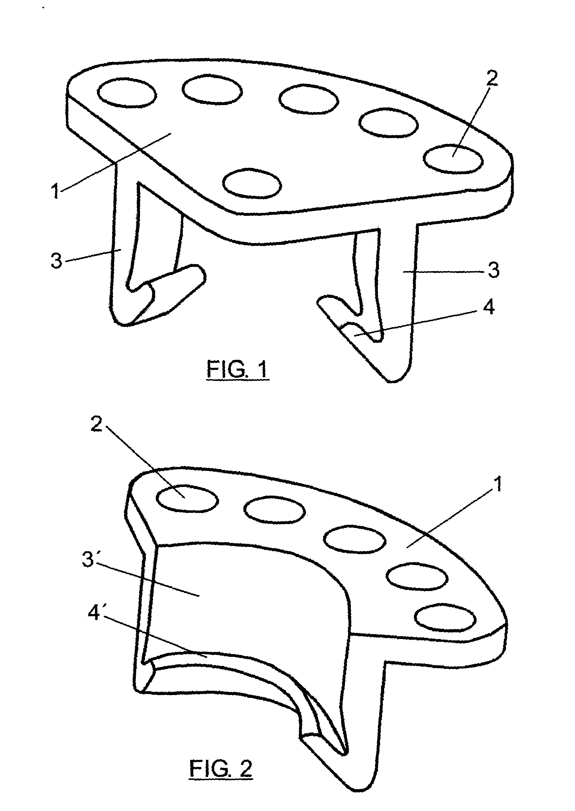

The joint used as a sealing element between vehicle bodywork components is of traditional makeup and corresponds in shape to that of the bodywork components between which it will be assembled. The sealing joint of the invention includes one or more fixing clips such as that shown in Figure 1. This clip includes a body 1, in the shape of a plate, having a series of holes or openings 2. This body is trapped in the joint, the openings 2 serving as an aid for inserting the shape joint. Projecting from the body or base 1 there are a series of lugs 3 which are finished at their ends in the shape of hooks 4. The lugs 3 are intended to be introduced through slots or notches of the bodywork component, as will be described below.

One, two or more lugs 3 with their corresponding hook 4 may project from each body or base 1.

Figure 2 shows an embodiment variant of the fixing clip, which comprises the same body or base 1 with the openings 2, projecting from the body of which there is a single continuous flange-shaped lug 3' finished in a continuous tab 4' forming the hook, similar to that of the lugs 3 of Figure 1.

As can be seen, the embodiment in Figure 2 corresponds in its makeup with that of Figure 1, with the difference that the body or base 1 has a cut portion following the contour of the lug or flange 3 in order to facilitate assembly thereof, and all this due to the fact that since there is a single lug 3 with an arched path, greater flexibility is required so that it adjusts to the profile of the slot or notch of the frame into which it will be introduced.

The clip is in any case made up of a single part, in which the body 1 is trapped or inserted in the joint mass, from which the lugs 3 will project with the end hook 4-4'.

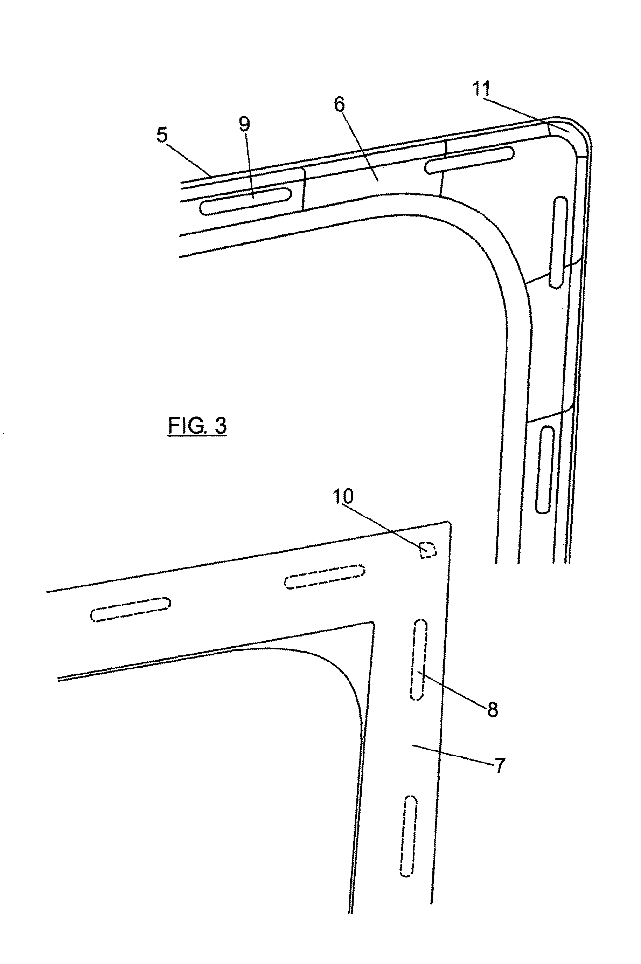

Figure 3 shows a front view of the door framework 5 and window frame 6 assembly, as well as that of the sealing joint 7 made in rubber, for example, which will act as a guide to the door window. The framework 5 and the frame 6 are welded to one another forming a single part and the joint 7 is fixed to said assembly with the aid of projections 8 which will fit into slots 9 of the window frame 6, as well as with the joint groove socket. It can be observed, as mentioned above, that there is an important cantilever at the corner in which a considerable bending moment may originate as a consequence of the door closing assembly and the subsequent contact of the rubber joint 7 with the assembly, which would produce a progressive shifting of the joint 7 towards the exterior of the door, dragging the window along with it. As a solution to this drawback it can be observed how the clip 10 has been inserted, clip which can correspond to any of the embodiments of Figures 1 and 2, the lugs 3-3' and hook 4-4' of which will be fitted into the slot or notch 11 made for that purpose in the corresponding angle in the frame 5.

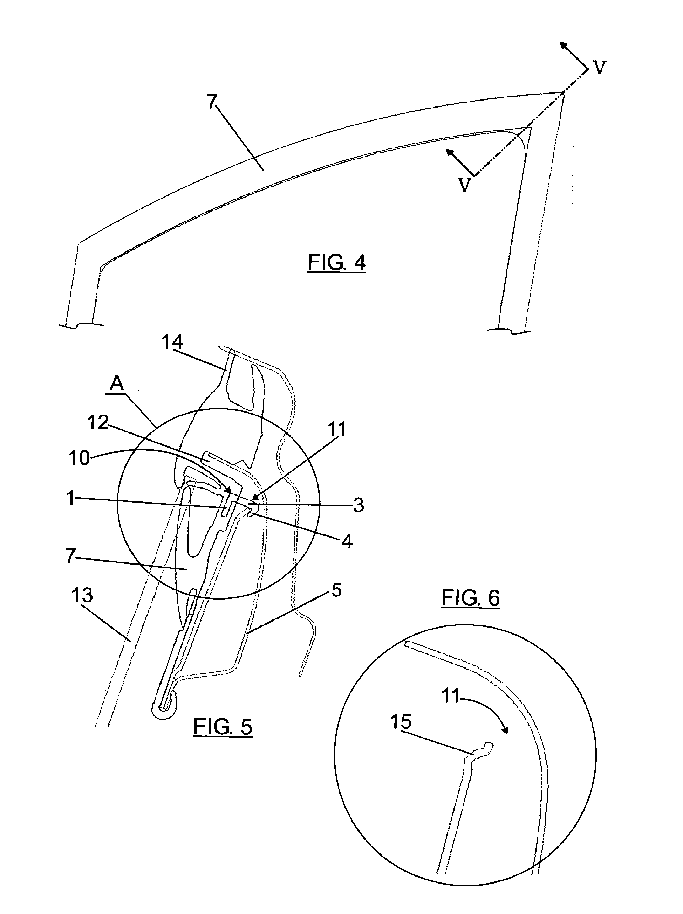

Figure 4 shows the joint 7 assembled on the frame, which will have a continuous outer appearance or surface, without any elements projecting from it, given that the body 1 of the clip is trapped in the joint.

As can be observed in the section of Figure 5 and the detail of Figure 6, the clip 10 has the body 1 trapped in the joint 7, the lug or lugs 3 introduced projecting from the latter with the hook 4 through the slot or notch 11 on the bodywork component, made up in this case by the door frame framework 5. As can be seen in Figure 5, the joint 7 is joined along the entire contour of the door framework 5 by means of the groove 12, and with the aid of the projections 8 distributed along the joint, as shown in Figure 3. It is in the corner of the joint 7 where the clips 10 are included, trapped or inserted therein. Also shown in Figure 5 is the position adopted by the window 13 and how it is indeed the rubber joint 7 which guides it in its vertical movement. The profile of the B-pillar 14 making contact with the corner of the joint and producing the effect causing the addition of the fixing clip object of this invention is also shown.

Figure 6 shows how the edge 15 limiting the slot or notch 11 for receiving the lugs 3 has a formation complementary to that of the end hook 4 in order to assure its fitting or embedding, to act as a retaining element on the lug 3 once the latter is introduced.

## Claims

1. A sealing joint between vehicle bodywork components, **characterised in that** it includes one or more fixing clips (10) comprising a body (1) which is trapped or inserted into the joint (7) and one or more anchoring lugs (3) projecting from the joint (7) on the side placed against the bodywork component (6), and which can be opposite and introduced in slots or notches (11) of said bodywork component (6); the body (1) of which is configured to adapt itself to the geometry of the surface of the bodywork component (6) on which it is placed; and the lugs of which (3, 3') are finished on their ends in hooks (4, 4') which are caught in the aforementioned slots or notches (11).

2. A joint according to claim 1, **characterised in that** the bodywork component (6) has a formation (4, 4') complementary with the lug hooks in the slots or notches (11) assuring catching and anchoring of said lugs (3, 3').
